# EUROPEAN PATENT SPECIFICATION

(11) **EP 3 076 011 B1**
(45) Date of publication and mention of the grant of the patent: **30.09.2020**
(21) Application number: 15161896.4
(22) Date of filing: 31.03.2015
(51) Int. Cl.: F03D 7/02

(54) **METHOD FOR OPERATING A WIND TURBINE**
VERFAHREN ZUM BETREIBEN EINER WINDTURBINE
PROCÉDÉ DE FONCTIONNEMENT D'UNE ÉOLIENNE

(43) Date of publication of application: 05.10.2016
(73) Proprietor: Siemens Gamesa Renewable Energy A/S, 7330 Brande (DK)
(72) Inventor: Alberts, Johannes Gerhardes Wardjan, 2000 Frederiksberg (DK); Hoegh, Gustav, 7400 Herning (DK)
(74) Representative: Aspacher, Karl-Georg

(56) References cited:
- EP-A1- 2 405 135
- US-A- 4 297 076
- US-A1- 2003 151 260
- US-A1- 2008 118 342
- US-A1- 2009 079 192
- US-A1- 2009 273 187
- US-A1- 2009 292 397

## Description

The invention relates to a method and to a control device for operating a wind turbine during idling. In addition, a wind turbine and a computer program product are suggested.

A wind turbine comprises a tower, a nacelle, a rotor hub connected to the nacelle and at least one rotor blade connected to the rotor hub. Moving air like, e.g., wind, impacting onto the at least one rotor blade transfers a part of its kinetic energy to the rotor blades causing rotation of the rotor blades and the rotor hub around a rotation axis. The rotor hub is coupled to an electric generator to generate electric energy during rotation of the rotor hub.

In case of "stopping" a wind turbine due to lack of wind or some other operational conditions (e.g. faults), the rotor hub of the wind turbine might not be stopped completely but is allowed to rotate ("idle") at extremely low rotational speeds ("idling speed"), typically around 0.2 rpm. During such kind of stopped condition ("idling"), the idling speed of the rotor hub is dependent on a wind speed and on a pitch angle of the individual blade. Thereby, a pitch angle of zero degree causes the blade or blade chord to be pitched in a way to be essential parallel to a plane of rotation of the rotor blades, whereas a pitch angle approaching 90 degrees results in pitching the blade in a way to be essential perpendicular to the plane of rotation.

During idling, the rotor blade might be at a fixed position equal to the mechanical end stop (physical limitation at, e.g., 88 degrees) of the pitch system without any active control of the rotational speed of the rotor hub.

Several problems might appear for a wind turbine in stopped, i.e. idle condition:
According to a first exemplary scenario there might be a collocation of frequencies at certain idling speeds caused by mechanical vibrations and by harmonic vibrations resulting in higher loads, e.g., at a generator or at a gearbox. Thus, a wind turbine cannot be operated at rotation speeds with occurring collocations of frequencies for extended periods of time without causing severe damage to, e.g., the generator with the consequence of, e.g., a cost intensive generator replacement.

According to a further exemplary scenario for a wind turbine in stopped condition the wind turbine is not idling, i.e. the rotor hub is almost in standstill for low to medium wind speeds wherein the rotor sometimes moves small distances in both directions. Such kind of "rocking" of the rotor hub between two positions might also cause damage to the bearings of the rotor hub.

Further, if no sufficient rotation speed is obtained during idling the lubrication of the main bearing of the wind turbine will not be sufficient which might also result in severe damage.

Moreover, in case of an offshore wind turbine in stopped condition thereby idling with low speed, a misalignment of wind and wave might also introduce additional damage to the tower which might be avoided by an increased rotational speed of the rotor hub during idling (e.g. at about 5 rpm) providing a sufficient damping to prevent excessive fatigue damage to the turbine.

US 2008/118342 A1 relates to a wind turbine operating in a trundle mode in order to reduce the oscillations in the support structure created through mechanical impacts on the support structure. Thereby the speed in trundle mode is controlled on basis of a measured or expected oscillation of the tower.

The object is thus to overcome such disadvantages and in particular to provide an improved approach for operating a wind turbine during idling.

This problem is solved according to the features of the independent claims. Further embodiments result from the depending claims.

In order to overcome this problem, a method is provided for operating a wind turbine during idling, comprising a rotor hub, thereby controlling a rotational speed of the rotor hub during idling of the wind turbine based on a determined rotational speed of the rotor hub and a reference rotational speed of the rotor hub. Thereby, the controlling of the rotational speed is based on at least one allowed rotational speed range, wherein the reference rotational speed of the rotor hub is set equal to the determined rotational speed of the rotor hub as long as the determined rotational speed of the rotor hub is within one of the at least one allowed rotational speed range, wherein the rotational speed of the rotor hub is controlled
- by adjusting a pitch angle of at least one rotor blade of the rotor hub based on the determined rotational speed of the rotor hub, and/or
- by adjusting a power torque of a generator communicating with the rotor hub based on the determined rotational speed of the rotor hub.

By implementing an active feedback system in a wind turbine a minimum idling speed may be guaranteed, whereby the idling speed of the wind turbine may be controlled such reducing loads caused by wind-wave misalignments thereby saving material costs on tower and foundation.

As a further advantage, coinciding or collocating frequencies of mechanical or harmonic vibrations can be avoided thereby ensuring a proper and thus effective operation of the wind turbine.

By operating the wind turbine according to the proposed solution the idling speed of the wind turbine may vary with the advantage that a tight controlling of a fixed idling speed reference might not be necessary.

Determining the rotational speed may be based on an active or direct measurement of the rotational speed. Alternatively or in addition to that the rotational speed may be derived or estimated (indirectly) based on at least one further operating parameter of the wind turbine.

As an example, the rotational speed may be determined, i.e. estimated, by processing generator voltage signals having a proportional correlation to the rotational speed of the rotor hub.

Alternatively, the rotational speed may be determined or derived by processing a gravitational direction of an accelerometer located in the rotor hub.

The controlling of the rotational speed is based on at least one allowed rotational speed range.

An allowed rotational speed range is a defined range, area or interval of rotational speeds where a wind turbine is allowed to idle, i.e. to be in a stopped condition thereby rotating with low rotational speeds.

The allowed rotational speed range may be part of a generic rotational speed reference region comprising further allowed rotational speed ranges optionally together with one or more not-allowed rotational speed ranges and/or a minimum rotational speed and/or a maximum allowed rotational speed.

A rotational speed range may be limited by a lower rotational speed threshold and/or an upper rotational speed threshold. In case of two neighboring speed ranges the upper rotational speed threshold of the first speed range may be the lower rotational speed threshold of the second speed range at the same time and vice versa.

By controlling the rotational speed based on an allowed speed range or speed region instead of a fixed rotational speed reference pitch activities and corresponding auxiliary power consumption may be advantageously minimized.

The rotational speed of the rotor hub is not changed as long as the determined rotational speed of the rotor hub is according to one of the least one allowed rotational speed range.

Alternatively the rotational speed of the rotor hub is not substantially changed as long as the determined rotational speed of the rotor hub is according to one of the least one allowed rotational speed range.

A change of the rotational speed of the rotor hub means an increase or decrease of the rotational speed.

In a further embodiment, in case the determined rotational speed of the rotor hub is not according to one of the at least one allowed rotational speed range the rotational speed of the rotor hub is changed until the measured rotational speed is according to one of the at least one allowed rotational speed range.

In a next embodiment, one of the at least one allowed rotational speed range comprises
- a minimum allowed idling speed, and/or
- a maximum allowed idling speed.

It is also an embodiment that the controlling of the rotational speed is based on at least one not-allowed rotational speed range.

Pursuant to another embodiment, in case the determined rotational speed of the rotor hub is according to one of the at least one not-allowed rotational speed range the rotational speed of the rotor hub is changed until the determined rotational speed is according to one of the at least one allowed rotational speed ranges.

According to an embodiment, the controlling of the rotational speed is based on a hysteresis approach.

By applying a hysteresis approach, the rotational speed of the rotor hub is changed to be within another allowed rotational speed range instead of keeping the rotational speed within the same allowed rotational speed range. The hysteresis approach may be applied in case of quick increases or decreases of wind speed.

The power torque of the generator, i.e. electrical torque generated by the electrical system or generator, may be adjusted by supplying current to the generator (i.e. operating the generator as a motor) thereby generating torque that will increase the rotational speed of the rotor hub thereby consuming power provided by a grid connected to the wind turbine.

Pursuant to another embodiment the at least one not-allowed rotational speed range is defined by a critical rotational speed setpoint.

A critical rotational speed setpoint is representing a critical rotational speed of the rotor hub to be avoided during idling. Thus, "critical" simply means any kind of exemption or exception from an allowed speed range.

Alternatively a set of critical rotational speed setpoints representing several values of critical rotational speeds to be avoided may be used.

The at least one not-allowed rotational speed range may be further defined by a critical rotational speed window comprising a lower and upper rotational speed threshold and corresponding to the at least one critical rotational speed setpoint.

The problem stated above is also solved by a wind turbine comprising a processing unit that is arranged for controlling a rotational speed of a rotor hub during idling of the wind turbine based on a determined rotational speed of the rotor hub.

The problem stated supra is also solved by a control device comprising and/or being associated with a processor unit and/or a hard-wired circuit and/or a logic device that is arranged such that the method as described herein is executable thereon.

It is noted that said processor unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Embodiments of the invention are shown and illustrated in the following figures:
- Fig.1: shows in a block diagram a schematic overview of an exemplary embodiment of the controller according to the proposed solution;
- Fig.2: depicts in a schematic view a defined rotational speed reference region as used by the proposed solution.

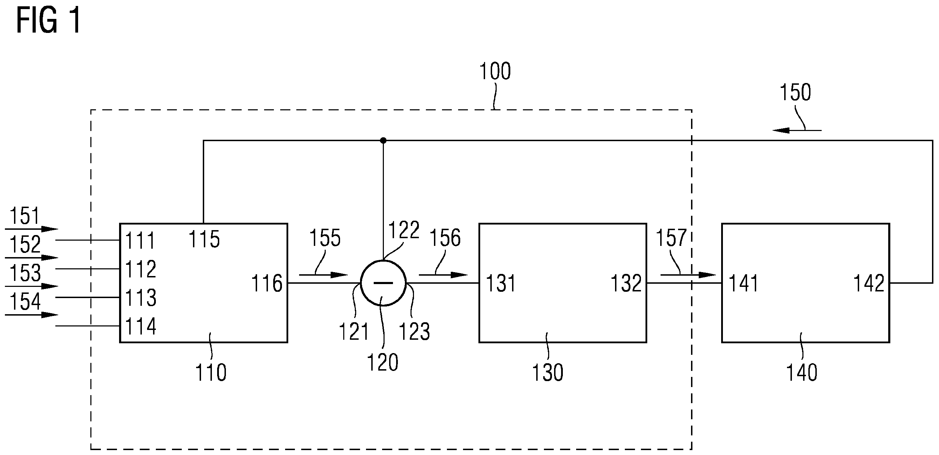

With reference to Fig.1, in a block diagram, a schematic overview of an exemplary embodiment of a controller 100 according to the proposed solution is shown. The controller 100 can be arranged as a speed-pitch controlled feedback controller comprising a reference speed evaluation device 110 coupled via a subtracting device 120 to a speed pitch controller device 130.

Thereby, an output 116 of the reference speed evaluation device 110 is connected to an input 121 of the subtracting device 120. An output 123 of the subtracting device 120 is connected to an input 131 of the speed pitch controller device 130 being connected via an output 132 to an input 141 of a wind turbine 140. Further, an output 142 of the wind turbine 140 is connected to an input 115 of the reference evaluation device 110 and to an input 122 of the subtracting device 120.

A signal 150 representing a determined, e.g., measured rotational speed ω_{measured} of a rotor hub of the wind turbine 140 is provided to the input 115 of the reference evaluation device 110 and to the input 122 of the subtracting device 120. Alternatively the signal 150 may represent the determined rotational speed derived from or estimated based on further parameters like, e.g., an actual voltage of a generator (not shown in Fig.1).

In addition to that, a signal 151 representing a minimum rotational speed, i.e. a minimum allowed idling speed ωₘᵢₙ is provided to an input 111 and a signal 152 representing a maximum rotational speed, i.e. a maximum allowed idling speed ωₘₐₓ is provided to an input 112 of the reference evaluation device 110.

In the exemplary arrangement as shown in Fig.1, a further signal 153 representing a critical rotational speed ω_{critical} of the rotor hub to be avoided (hereinafter also referred to as "critical rotational speed setpoint") is supplied to an input 113 of the reference evaluation device 110. Alternatively a set of critical rotational speed setpoints representing several critical rotational speeds to be avoided can be provided via the signal 153 to the reference evaluation device 110.

A signal 154 representing a critical rotational speed window ω_{window} corresponding to the at least one critical rotational speed setpoint ω_{critical} is guided to an input 114 of the evaluation device 110. Based on the input signals 150...154 a signal 155 representing a reference rotational speed ω_{ref} is derived by the reference evaluation device 110 being forwarded via the output 116 to the input 121 of the subtracting device 120.

According to the proposed solution, the controller 100 as exemplarily shown in Fig.1 is active during the idling state and the start-up state of the wind turbine 140. Thereby, instead of using a fixed pitch angle, the operation of the wind turbine during idling is controlled based on a rotational speed reference region defined at least by the minimum ωₘᵢₙ and the maximum ωₘₐₓ allowed idling speed. The reason for using the aforementioned defined rotational speed reference region instead of using a single rotational speed reference during idling is that any auxiliary power consumption should be minimized during idling of the wind turbine which can be achieved in particular by reducing pitch activities - thus no single fixed idling speed should be in focus of the proposed solution, but it can be. In fact, the aforementioned idling requirements concerning the minimum allowed idling speed ωₘᵢₙ and the maximum allowed idling speed ωₘₐₓ should be met during idling. These idling requirements may further comprise at least one rotational speed range to be avoided, that rotational speed range being defined by the at least one critical rotational speed setpoint ω_{critical} together with the corresponding critical rotational speed window ω_{window}.

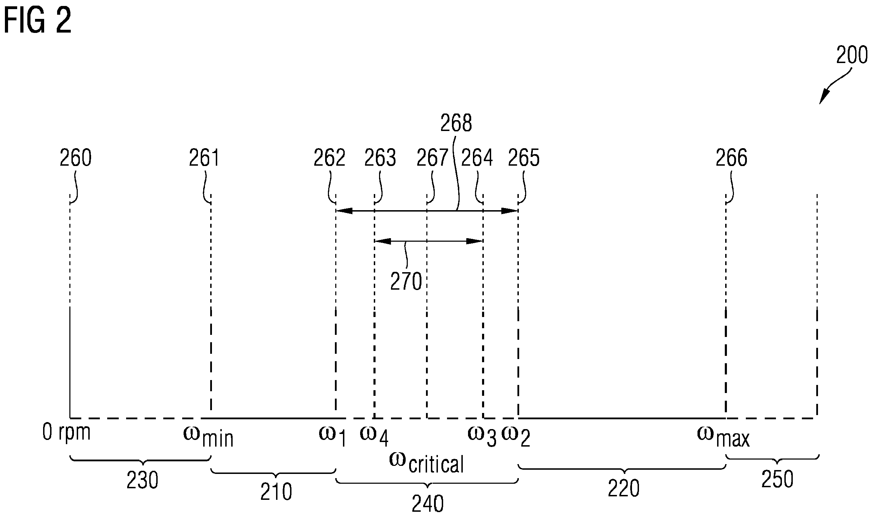

The proposed idling requirements are exemplarily shown in Fig.2 depicting in a schematic view the aforementioned defined rotational speed reference region 200 according to the proposed solution. The rotational speed reference region 200 specifies allowed rotational speed ranges 210, 220 and not-allowed rotational speed ranges 230, 240, 250. According to Fig.2 the first not-allowed rotational speed range 230 (here idling is not allowed due to too low rotational speed of the rotor hub) is defined by a "zero" (i.e. 0 rpm) rotational speed 260 and a minimum allowed idling speed (ωₘᵢₙ) 261. The first allowed rotational speed range 210 is defined by the minimum allowed idling speed (ωₘᵢₙ) 261 and a first rotational speed (ω₁) 262 representing at the same time a lower rotational speed threshold of a critical rotational speed window (ω_{window}) 268 correlating with a critical rotational speed setpoint (ω_{critical}) 267. The critical rotational speed window (ω_{window}) 267 representing the not-allowed rotational speed range 240 (here idling is not allowed due to, e.g., harmonic resonance) is further defined by a second rotational speed 265 (ω₂) representing an upper rotational speed threshold of the critical rotational speed window (ω_{window}) 268.

The allowed rotational speed range 220 is defined by the second rotational speed 265 (ω₂) representing a lower rotational speed threshold of the allowed rotational speed range 220 and a maximum allowed idling speed (ωₘₐₓ) 266. The not-allowed rotational speed range 250 (idling is not allowed due to, e.g., too high rotational speed) is defined by a rotational speed range beyond the maximum allowed idling speed (ωₘₐₓ) 266.

By operating the wind turbine according to the proposed solution the idling speed of the wind turbine may vary during idling with the advantage that a tight controlling of a defined idling speed reference might not be necessary.

In the following, the proposed method for operating a wind turbine during idling will be explained in more detail:
The measured rotational speed (ω_{measured}) 150 provided to the input 115 is verified by the reference speed evaluation device 110 whether the actual rotational (idling) speed, i.e. the measured rotational speed 150 is within one of the allowed rotational speed ranges 210, 220. In case the measured rotational speed 150 is within one of the allowed rotational speed ranges 210, 220 the reference rotational speed (ω_{ref}) 155 is set equal to the measured rotational speed (ω_{measured}) 150. As a consequence, an error signal 156 derived by the subtracting device 120 and representing a difference between the provided measured rotational speed (ω_{measured}) 150 and the reference rotational speed (ω_{ref}) 155 is set equal to a value "zero" (i.e. 0 rpm). Providing such kind of error signal ("zero-signal") to the speed-pitch controller 130 causes no change to a reference pitch angle signal (θ_{ref}) 157 derived by the speed pitch controller device 130 controlling individual pitch angles of the wind turbine 140. Consequently, the actual pitch angles of the blades of the rotor hub will be maintained unchanged.

In case the measured rotational speed (ω_{measured}) 150 is not within one of the allowed rotational speed ranges 210, 220 the reference rotational speed (ω_{ref}) 155 is set unequal to the measured rotational speed (ω_{measured}) 150. As a consequence, the error signal 156 is set unequal to "zero" causing a change to the reference pitch angle signal (θ_{ref}) 157 which will finally initiate a change of the pitch angles of the wind turbine 140 thereby increasing or reducing the individual pitch angles of the rotor blades. Accordingly, the idling speed of the wind turbine will be reduced or increased until the measured rotational speed (ω_{measured}) 150 will be within one of the allowed rotational speed ranges 210, 220 again.

According to a first exemplary scenario, the wind turbine 140 is allowed to idle between the minimum allowed idling speed 261 with ωₘᵢₙ = 1 rpm and the maximum allowed idling speed 266 with ωₘₐₓ = 5 rpm. As a further requirement, i.e. limitation, the wind turbine 140 is not allowed to idle between the first rotational speed 262 with ω₁ = 2 rpm and the second rotational speed 265 with ω₂ = 3 rpm. Preferably, the wind turbine 140 is allowed to idle at about 1.5 rpm. In case the measured rotational speed (ω_{measured}) 150 is within one of the allowed rotational speed ranges 210, 220 the reference rotational speed (ω_{ref}) 155 is set equal to the actual measured rotational speed (ω_{measured}) 150 causing no changes to the individual pitch angels of the rotor blades.

In a further exemplary scenario following up the first scenario the wind drops and the idling speed 150 is about ω_{measured} = 0.9 rpm. As soon as the idling speed 150 drops below the minimum allowed idling speed 261 with ωₘᵢₙ = 1 rpm the reference rotational speed (ω_{ref}) 155 is not set equal to the actual idling speed (ω_{measured}) 150. Instead the reference rotational speed 155 is set to the minimum allowed idling speed 261 with ω_{ref} = ωₘᵢₙ = 1 rpm causing an error signal 156 of 1.0 - 0.9 = 0.1 inducing the wind turbine 140 to pitch in, i.e. reducing the individual pitch angles of the rotor blades to increase rotational speed.

According to a third exemplary scenario, the wind turbine 140 is idling at an initial idling speed 150 of ω_{measured} = 1.5 rpm wherein the wind picks up suddenly and the idling speed 150 increases. Thereby, the reference rotational speed (ω_{ref}) 155 is set equal to the actual idling speed 150, i.e. ω_{ref} = ω_{measured} until the idling speed 150 reaches the first rotational speed 262 with ω₁ = 2 rpm. By exceeding the first rotational speed 262 the reference rotational speed 155 is set equal to the first rotational speed 262 with ω_{ref} = ω₁ = 2 rpm. Consequently, the resulting error signal 156 derived by the subtracting device 120 representing the difference between the reference rotational speed 155 and the measured rotational speed 150 causes the wind turbine 140 to pitch out, i.e. increasing the individual pitch angles of the rotor blades to keep the idling speed 150 below the first rotational speed 262.

In case the wind speed further increases quickly, the idling speed ω_{measured} may reach a third rotational speed 264 (ω3) before the aforementioned intended decrease of the idling speed 150 below the first rotational speed 262 is effective. In such kind of situation, i.e. in case the idling speed 150 reaches the third rotational speed (ω₃) 264 instead of being decreased below the first rotational speed (ω1) 262 the reference rotational speed (ω_{ref}) 155 is set to the second rotational speed 265 (ω₂) before the wind turbine is able to decrease the rotational speed 150 (this is also referred to as "hysteresis approach" indicated by a double arrow referenced by the index 270 in Fig.2). Consequently the rotational speed 150 will be increased until reaching the allowed rotational speed range 220, i.e. ω_{measured} >= ω₂.

Vice versa, according to a further exemplary scenario, the wind turbine 140 is idling according to the allowed rotational speed range 220 at an idling speed 150 of, e.g., ω_{measured} = 3.5 rpm wherein the wind slows down rapidly and the idling speed 150 decreases. Thereby, as long as the idling speed 150 is within, i.e. according to the rotational speed range 220 the reference rotational speed 155 is set equal to the actual idling speed 150, i.e. ω_{ref} = ω_{measured} until the idling speed 150 reaches the second rotational speed 265, i.e. ω₂ = 3 rpm. By falling below the second rotational speed 265 the reference rotational speed 155 is now set equal the second rotational speed 265, i.e. ω_{ref} = ω₂ = 3 rpm. Consequently, the resulting error signal 156 derived by the subtracting device 120 causes the wind turbine 140 to pitch in, i.e. minimizing the individual pitch angle of the rotor blades to speed up the idling speed 150 above the second rotational speed 265.

In case the wind speed further decreases quickly, the idling speed 150 may reach a forth rotational speed 263 (ω₄) before the indented increase of the idling speed 150 is effective. In such kind of situation, i.e. in case the idling speed 150 reaches the forth rotational speed 265 (ω4) instead of being increased to the second rotational speed 265 the reference rotational speed 155 is set to the first rotational speed 262, i.e. ω_{ref} = ω₁, (by applying the "hysteresis approach") before the wind turbine 140 is able to increase the rotational speed 150. Consequently the rotational speed 150 will be decreased until reaching the allowed rotational speed range 210, i.e. ω_{measured} <= ω₁.

Based on the proposed solution a minimization of pitch activities and thus a reduction of auxiliary power demand as well as a reduction of mechanical wear and tear on the hydraulic and mechanical pitch system can be achieved advantageously resulting in an extension of the lifetime of a wind turbine. The aforementioned exemplary scenarios are based on a rotational speed reference region (as exemplarily shown in Fig.2) comprising, e.g., two allowed rotational speed ranges and one not allowed rotational speed range as well as a minimum allowed idling speed and a maximum allowed idling speed. This can be extended by any number of allowed rotational speed ranges and/or not allowed rotational speed ranges fitting to the specific wind turbines.

According to an alternative embodiment of the proposed solution, the reference rotational speed (ω_{ref}) 155 is set within one of the allowed rotation speed ranges 210, 220 thereby applying a dead zone to the resulting error signal 156 derived by the subtracting device 120. Hereby the same aforementioned hysteresis approach can be applied, e.g., switching the reference rotational speed 155 between the allowed rotational speed ranges 210, 220.

Based on the proposed solution, an active feedback system can be implemented based on a guaranteed minimum idling speed.

Advantageously, the proposed solution enables the operation of wind turbines during idling in particular at lower or higher wind speeds in a controlled and safe way thereby guaranteeing a defined idling speed. As a benefit, damage to the main bearings can be reduced possibly extending the life time of the main bearing and prolonging turbine life time.

As a further advantage in particular for offshore scenarios, in case of a misalignment of wind and wave, loads can be reduced significantly by applying the proposed solution resulting in towers and foundations with less capacity and fewer costs or extended life time of the tower/foundation. As an example, loading of fore-after tower bending fatigue during a wind wave misalignment may be reduced Leading to significant cost savings per wind turbine.

As a further advantage, the proposed solution allows an effective implementation of pitch bearing lubrication thereby reducing damage to the bearings and reducing costs as well and extending life time. Due to the idling rotor hub oil and/or grease is moved around within the pitch bearings thereby providing an effective pitch bearing lubrication.

Although the invention is described in detail by the embodiments and scenarios above, it is noted that the invention is not at all limited to such embodiments or scenarios. In particular, alternatives can be derived by a person skilled in the art from the exemplary embodiments, scenarios and the illustrations without exceeding the scope of the appended claims.

## Claims

1. A method for operating a wind turbine (140) during idling, comprising a rotor hub, thereby controlling a rotational speed of the rotor hub during idling of the wind turbine (140) based on a determined rotational speed (150) of the rotor hub and a reference rotational speed (155) of the rotor hub, wherein the controlling of the rotational speed is based on at least one allowed rotational speed range (210, 220), wherein the reference rotational speed (155) of the rotor hub is set equal to the determined rotational speed (150) of the rotor hub as long as the determined rotational speed (150) of the rotor hub is within one of the at least one allowed rotational speed range (210, 220), wherein the rotational speed of the rotor hub is controlled
- by adjusting a pitch angle of at least one rotor blade of the rotor hub based on the determined rotational speed (150) of the rotor hub, and/or
- by adjusting a power torque of a generator communicating with the rotor hub based on the determined rotational speed (150) of the rotor hub.

2. The method according to claim 1, wherein
in case the determined rotational speed (150) of the rotor hub is not according to one of the at least one allowed rotational speed range (210, 220) the rotational speed of the rotor hub is changed until the determined rotational speed (150) is according to one of the at least one allowed rotational speed range (210, 220).

3. The method according to claim 1 or 2, wherein
one of the at least one allowed rotational speed range (210, 220) comprises
- a minimum allowed idling speed (261), and/or
- a maximum allowed idling speed (266).

4. The method according to any of the preceding claims, wherein
the controlling of the rotational speed is based on at least one not-allowed rotational speed range (230, 240, 250) .

5. The method according to claim 4, wherein
in case the determined rotational speed (150) of the rotor hub is according to one of the at least one not-allowed rotational speed range (230, 240, 250) the rotational speed of the rotor hub is changed until the determined rotational speed (150) is according to one of the at least one allowed rotational speed range (210, 220) .

6. The method according to any of the preceding claims, wherein the controlling of the rotational speed is based on a hysteresis approach.

7. The method according to any of the preceding claims, wherein the at least one not-allowed rotational speed range (230, 240, 250) is defined by a critical rotational speed setpoint (267).

8. A wind turbine, comprising
a processing unit that is arranged for controlling a rotational speed of a rotor hub during idling of the wind turbine based on a determined rotational speed of the rotor hub and a reference rotational speed (155) of the rotor hub, wherein the controlling of the rotational speed is based on at least one allowed rotational speed range (210, 220),
wherein the reference rotational speed (155) of the rotor hub is set equal to the determined rotational speed (150) of the rotor hub as long as the determined rotational speed (150) of the rotor hub is within one of the at least one allowed rotational speed range (210, 220), wherein the rotational speed of the rotor hub is controlled
- by adjusting a pitch angle of at least one rotor blade of the rotor hub based on the determined rotational speed (150) of the rotor hub, and/or
- by adjusting a power torque of a generator communicating with the rotor hub based on the determined rotational speed (150) of the rotor hub.

9. A control device comprising and/or being associated with a processor unit and/or a hard-wired circuit and/or a logic device that is arranged to perform the method according to any of the preceding claims 1 to 7.

10. A computer program product directly loadable into a memory of a digital computer, comprising software code portions which, when the program is executed by a computer, cause the computer to perform the steps of the method according to any of the claims 1 to 7.

## Patentansprüche

1. Verfahren zum Betreiben einer Windenergieanlage (140), die eine Rotornabe umfasst, im Leerlauf, mit dem sich eine Drehzahl der Rotornabe im Leerlauf der Windenergieanlage (140) auf der Grundlage einer ermittelten Drehzahl (150) der Rotornabe und einer Bezugsdrehzahl (155) der Rotornabe regeln lässt,
wobei das Regeln der Drehzahl auf mindestens einem zulässigen Drehzahlbereich (210, 220) basiert,
wobei die Bezugsdrehzahl (155) der Rotornabe auf die ermittelte Drehzahl (150) der Rotornabe eingestellt wird, solange die ermittelte Drehzahl (150) der Rotornabe in einem des mindestens einen zulässigen Drehzahlbereichs (210, 220) liegt,
wobei die Drehzahl der Rotornabe geregelt wird
- durch Anpassen eines Einstellwinkels mindestens eines Rotorblatts der Rotornabe auf der Grundlage der ermittelten Drehzahl (150) der Rotornabe und/oder
- durch Anpassen eines Leistungsdrehmoments eines Generators, der mit der Rotornabe verbunden ist, auf der Grundlage der ermittelten Drehzahl (150) der Rotornabe.

2. Verfahren nach Anspruch 1, wobei
die Drehzahl der Rotornabe, falls die ermittelte Drehzahl (150) der Rotornabe nicht einem des mindestens einen zulässigen Drehzahlbereichs (210, 220) entspricht, so lange geändert wird, bis die ermittelte Drehzahl (150) einem des mindestens einen zulässigen Drehzahlbereichs (210, 220) entspricht.

3. Verfahren nach Anspruch 1 oder 2, wobei
einer des mindestens einen zulässigen Drehzahlbereichs (210, 220) Folgendes umfasst:
- eine zulässige Leerlaufmindestdrehzahl (261) und/oder
- eine zulässige Leerlaufhöchstdrehzahl (266).

4. Verfahren nach einem der vorhergehenden Ansprüche, wobei das Regeln der Drehzahl auf mindestens einem unzulässigen Drehzahlbereich (230, 240, 250) basiert.

5. Verfahren nach Anspruch 4, wobei
die Drehzahl der Rotornabe, falls die ermittelte Drehzahl (150) der Rotornabe einem des mindestens einen unzulässigen Drehzahlbereichs (230, 240, 250) entspricht, so lange geändert wird, bis die ermittelte Drehzahl (150) einem des mindestens einen zulässigen Drehzahlbereichs (210, 220) entspricht.

6. Verfahren nach einem der vorhergehenden Ansprüche, wobei die Regelung der Drehzahl auf einem Hystereseansatz basiert.

7. Verfahren nach einem der vorhergehenden Ansprüche, wobei der mindestens eine unzulässige Drehzahlbereich (230, 240, 250) durch einen kritischen Drehzahlsollwert (267) definiert wird.

8. Windenergieanlage, die Folgendes umfasst:
eine Verarbeitungseinheit, die zum Regeln einer Drehzahl einer Rotornabe im Leerlauf der Windenergieanlage auf der Grundlage einer ermittelten Drehzahl der Rotornabe und einer Bezugsdrehzahl (155) der Rotornabe angeordnet ist,
wobei das Regeln der Drehzahl auf mindestens einem zulässigen Drehzahlbereich (210, 220) basiert,
wobei die Bezugsdrehzahl (155) der Rotornabe auf die ermittelte Drehzahl (150) der Rotornabe eingestellt ist, solange die ermittelte Drehzahl (150) der Rotornabe in einem des mindestens einen zulässigen Drehzahlbereichs (210, 220) liegt,
wobei die Drehzahl der Rotornabe geregelt wird
- durch Anpassen eines Einstellwinkels mindestens eines Rotorblatts der Rotornabe auf der Grundlage der ermittelten Drehzahl (150) der Rotornabe und/oder
- durch Anpassen eines Leistungsdrehmoments eines Generators, der mit der Rotornabe verbunden ist, auf der Grundlage der ermittelten Drehzahl (150) der Rotornabe.

9. Steuervorrichtung, die eine Prozessoreinheit und/oder eine festverdrahtete Schaltung und/oder eine Logikvorrichtung, die zum Durchführen des Verfahrens nach einem der vorhergehenden Ansprüche 1 bis 7 angeordnet ist, umfasst und/oder mit einer solchen verknüpft ist.

10. Computerprogrammprodukt, das sich direkt in einen Speicher eines digitalen Computers laden lässt und Softwarecodeteile umfasst, die, wenn das Programm von einem Computer ausgeführt wird, den Computer dazu veranlassen, die Schritte des Verfahrens nach einem der Ansprüche 1 bis 7 durchzuführen.

## Revendications

1. Procédé d'actionnement d'une éolienne (140) pendant la marche au ralenti, comprenant un moyeu de rotor, en contrôlant ainsi une vitesse de rotation du moyeu de rotor pendant la marche au ralenti de l'éolienne (140), sur la base d'une vitesse de rotation déterminée (150) du moyeu de rotor et d'une vitesse de rotation de référence (155) du moyeu de rotor,
dans lequel le contrôle de la vitesse de rotation est basé sur au moins une plage de vitesse de rotation autorisée (210, 220),
dans lequel la vitesse de rotation de référence (155) du moyeu de rotor est réglée comme étant égale à la vitesse de rotation déterminée (150) du moyeu de rotor tant que la vitesse de rotation déterminée (150) du moyeu de rotor est dans l'une d'au moins une plage de vitesse de rotation autorisée (210, 220),
dans lequel la vitesse de rotation du moyeu de rotor est contrôlée
- en ajustant un angle de pas d'au moins une pale de rotor du moyeu de rotor sur la base de la vitesse de rotation déterminée (150) du moyeu de rotor, et/ou
- en ajustant un couple de puissance d'un générateur communiquant avec le moyeu de rotor sur la base de la vitesse de rotation déterminée (150) du moyeu de rotor.

2. Procédé selon la revendication 1, dans lequel
si la vitesse de rotation déterminée (150) du moyeu de rotor n'est pas conforme à l'une d'au moins une plage de vitesse de rotation autorisée (210, 220), la vitesse de rotation du moyeu de rotor est modifiée jusqu'à ce que la vitesse de rotation déterminée (150) soit conforme à l'une de la au moins une plage de vitesse de rotation autorisée (210, 220) .

3. Procédé selon la revendication 1 ou 2, dans lequel
une de la au moins une plage de vitesse de rotation autorisée (210, 220) comprend :
- une vitesse de ralenti minimale autorisée (261), et/ou
- une vitesse de ralenti maximale autorisée (266).

4. Procédé selon l'une quelconque des revendications précédentes, dans lequel
le contrôle de la vitesse de rotation est basé sur au moins une plage de vitesse de rotation non-autorisée (230, 240, 250) .

5. Procédé selon la revendication 4, dans lequel
si la vitesse de rotation déterminée (150) du moyeu de rotor est conforme à la au moins une plage de vitesse de rotation non-autorisée (230, 240, 250), la vitesse de rotation du moyeu de rotor est modifiée jusqu'à ce que la vitesse de rotation déterminée (150) soit conforme à l'une de la au moins une plage de vitesse de rotation autorisée (210, 220).

6. Procédé selon l'une quelconque des revendications précédentes, dans lequel le contrôle de la vitesse de rotation est basé sur une approche d'hystérésis.

7. Procédé selon l'une quelconque des revendications précédentes, dans lequel la au moins une plage de vitesse de rotation non-autorisée (230, 240, 250) est définie par un point de consigne de vitesse de rotation critique (267).

8. Éolienne, comprenant :
une unité de traitement qui est agencée afin de contrôler une vitesse de rotation d'un moyeu de rotor pendant la marche au ralenti de l'éolienne, sur la base d'une vitesse de rotation déterminée du moyeu de rotor et d'une vitesse de rotation de référence (155) du moyeu de rotor,
dans lequel le contrôle de la vitesse de rotation est basé sur au moins une plage de vitesse de rotation autorisée (210, 220),
dans lequel la vitesse de rotation de référence (155) du moyeu de rotor est réglée de façon à être égale à la vitesse de rotation déterminée (150) du moyeu de rotor tant que la vitesse de rotation déterminée (150) du moyeu de rotor est dans l'une de la au moins une plage de vitesse de rotation autorisée (210, 220),
dans lequel la vitesse de rotation du moyeu de rotor est contrôlée
- en ajustant un angle de pas d'au moins une pale de rotor du moyeu de rotor sur la base de la vitesse de rotation déterminée (150) du moyeu de rotor, et/ou
- en ajustant un couple de puissance d'un générateur communiquant avec le moyeu de rotor sur la base de la vitesse de rotation déterminée (150) du moyeu de rotor.

9. Dispositif de commande comprenant et/ou étant associé à une unité de processeur et/ou à un circuit câblé et/ou à un dispositif logique qui est agencé de façon à réaliser le procédé selon l'une quelconque des revendications 1 à 7.

10. Programme informatique pouvant être chargé directement dans une mémoire d'un ordinateur numérique, comprenant des parties de code logiciel qui, lorsque le programme est exécuté par un ordinateur, amènent l'ordinateur à effectuer les étapes du procédé selon l'une quelconque des revendications 1 à 7.
